# EUROPÄISCHE PATENTSCHRIFT

(11) **EP 2 052 140 B1**
(45) Veröffentlichungstag und Bekanntmachung des Hinweises auf die Patenterteilung: **23.05.2018**
(21) Anmeldenummer: 07765124.8
(22) Anmeldetag: 07.07.2007
(51) Int. Cl.: F02B 3/02, F02B 37/04, F02B 43/00, F02D 19/06

(54) **BRENNKRAFTMASCHINE FÜR GAS UND BENZIN**
INTERNAL COMBUSTION ENGINE FOR GAS AND GASOLINE
MOTEUR À COMBUSTION INTERNE POUR GAZ ET ESSENCE

(30) Priorität: 09.08.2006 DE 102006037381; 18.10.2006 DE 102006049242
(43) Veröffentlichungstag der Anmeldung: 29.04.2009
(73) Patentinhaber: Volkswagen Aktiengesellschaft, 38440 Wolfsburg (DE)
(72) Erfinder: FLADUNG, Oliver, 38122 Braunschweig (DE); HAGELSTEIN, Dirk, 38110 Braunschweig (DE); NOODT, Florian, 38165 Lehre OT Flechtorf (DE); POTT, Ekkehard, 38518 Gifhorn (DE)
(86) Internationale Anmeldenummer: PCT/EP2007/006043
(87) Internationale Veröffentlichungsnummer: WO 2008/017354

(56) Entgegenhaltungen:
- EP-A- 1 321 658
- EP-B1- 1 846 650
- WO-A-99/42718
- DE-A1- 10 062 391
- JP-A- 2005 233 059
- US-A1- 2006 064 981

## Beschreibung

Die Erfindung betrifft ein Verfahren zum Betrieb einer Brennkraftmaschine, welche als mit Gas und Benzin betreibbarer aufladbarer Otto-Motor ausgebildet ist.

Erdgas hat aufgrund seiner Eigenschaften als Alternativkraftstoff in letzter Zeit an Bedeutung gewonnen. Verbrennungsmotorisch interessant ist Erdgas vor allem wegen seiner hohen Oktanzahl und damit hohen Klopffestigkeit und relativ hohen Energiedichte. Ein weiterer Vorteil ist der im Vergleich zu Benzin niedrige Gehalt an Katalysatorgiften wie Phosphor und Schwefel und der im Vergleich zu Benzin oder Diesel geringe Kohlenstoffanteil. Erdgas hat somit gute Verbrennungseigenschaften bei geringem Schadstoffausstoß und verminderter CO₂-Emission.

Als Kraftstoff wird Erdgas in hoch verdichteter Form unter der Bezeichnung CNG (Compressed Natural Gas) verwendet. Das komprimierte Gas wird unter einem Druck von ca. 200 bar in den Tank gefüllt und dabei auf ein Zweihundertstel seines Volumens reduziert.

Erdgasbetriebene Kraftfahrzeuge werden derzeit in zwei verschiedenen Versionen angeboten, mit bivalenter oder monovalenter Brennkraftmaschine. Bivalente Brennkraftmaschinen können sowohl mit Erdgas als auch mit Benzin betrieben werden, schöpfen jedoch üblicherweise das Potenzial von Erdgas aufgrund unvollständiger Leistungsoptimierung der Brennkraftmaschine nicht voll aus.

Monovalente Fahrzeuge werden nur mit Erdgas betrieben oder haben einen Nottank mit bis zu 15 Litern Benzin. Die Brennkraftmaschine ist in diesem Fall auf den Erdgasantrieb optimiert, wobei üblicherweise ein "Notbetrieb" oder eine Reichweitenerhöhung mittels in einem Nottank (< 15l Volumen) mitgeführtem Benzin vorgesehen ist, welches in das Saugrohr eingespritzt wird.

In der Vergangenheit wurden erdgasbetriebene Brennkraftmaschinen vor allem unter dem Gesichtspunkt niedriger Schadstoffemission konzipiert. Um auch im dynamischen Betrieb eine optimale Schadstoffumwandlung im Katalysator zu gewährleisten, ist eine präzise stöchiometrische Zusammensetzung des Erdgas-Luft-Gemisches (λ=1) erforderlich. Die Gaszumischung erfolgt deshalb in einigen Anwendungsfällen mit elektronisch geregelter Gaszufuhr, beispielsweise mittels einer Lambda-Regelung mittels Sauerstoffsensor, und "Multipoint"-Einblasung vor das Einlassventil eines jeden Zylinders der Brennkraftmaschine.

Aufgrund der gasförmigen Einblasung des Kraftstoffs in das Saugrohr wird ein merklicher Anteil der Ansaugluft durch das Erdgas verdrängt. Dadurch nimmt der Luftaufwand und damit auch die Leistung der Brennkraftmaschine ab. Bekanntlich liegt die Leistung eines üblichen Hubkolbenmotors bei Betrieb mit Erdgas ca. 15 % unter derjenigen bei Betrieb mit Benzin und unter derjenigen von aufgeladenen Dieselmotoren.

Ein teilweiser Ausgleich der Minderleistung ist, wie in der DE 100 62 391 A1 offenbart, durch eine Aufladung der Brennkraftmaschine bei Betrieb mit Erdgas möglich.

Eine weitere Reduzierung der gegenüber heutigen aufgeladenen Motoren bestehenden Leistungs- und Verbrauchsnachteile von erdgasbetriebenen Brennkraftmaschinen ist durch den Einsatz von Magermotorkonzepten möglich. Die bei Magermotoren geringere Bauteilbelastung erlaubt eine deutliche Anhebung der Ladedrücke. Allerdings nimmt bei sehr mageren Gemischen die Brenngeschwindigkeit ab, sodass zur Kompensation eine intensivierte Ladungsbewegung erforderlich ist. Entsprechende Magermotoren weisen neben Brennverfahren mit erweiterter Magerlauffähigkeit eine Abgasturboaufladung mit Ladeluftkühlung auf. Das Verdichtungsverhältnis liegt, je nach Konzept, zwischen 1:11 und 1:13.

Neben den Entwicklungen auf dem Gebiet der Magermotorkonzepte, gibt es Lösungsansätze, durch Direkteinspritzung des gasförmigen Kraftstoffs in den Brennraum den Wirkungsgrad erdgasbetriebener Brennkraftmaschinen weiter zu erhöhen. Der gasförmige Kraftstoff wird hierbei gegen Ende des Verdichtungstaktes unter hohen Druck von 200 bar direkt in den im Kolben angeordneten Brennraum eines ungedrosselten, hochverdichtenden Motors eingeblasen. Dadurch bildet sich, ähnlich wie beim Dieselmotor, ein inhomogenes Gas-Luftgemisch. Eine derartige Brennkraftmaschine ist beispielsweise aus der US 5,329,908 A bekannt. Bei Absinken des Gasdrucks unter einen vorgegebenen Wert, muss jedoch der Einblasungsbeginn und die Einblasungsdauer umgestellt werden, um das Einströmen des Gases sicher zu stellen. Dabei wird ein homogenes Gemisch gebildet, welches ein erheblich reduziertes Verdichtungsverhältnis erfordert. Da die Brennkraftmaschine mit einem konstanten Verdichtungsverhältnis betrieben wird, richtet sich das zu wählende Verdichtungsverhältnis nach der Betriebsart mit der höchsten Klopfneigung, also bei homogener Gemischbildung. Dadurch ist der Betrieb der Brennkraftmaschine unzuverlässig und nicht aussetzerfrei, insbesondere unter instationären Betriebsbedingungen, und der Wirkungsgrad der Brennkraftmaschine bei Volllast nicht optimal.

Aus der WO 99/42718 A ist bereits ein sog. PCCI - Motor bekannt, bei dem Kraftstoff und die Luft im Einlasskanal oder im Zylinder vorgemischt gemischt werden, lange bevor eine dann durch Kompression erzeugte Entzündung auftritt. In einem Luftansaugkanal ist dabei stromauf einer Drosselklappe. Ferner sind Injektoren zur direkten Einspritzung von Diesel in den Brennraum vorgesehen. Stromauf eines Verdichters eines Abgasturbolader ist im Luftansaugkanal ein Kompressor angeordnet.

Aus der JP 2005-233059 A ist eine übliche mit Benzin und Gas betreibbare Brennkraftmaschine bekannt, bei der Benzin direkt in den Brennraum eingespritzt wird, während Gas in den Luftansaugpfad stromauf von Zylinderventilen eingeblasen wird.

Aus der US 2006/064981 A1 ist ferner eine Aufladevorrichtung für einen Ottomotor bekannt, wobei ein elektrisch angetriebener Kompressor und ein Turbolader in Reihe geschaltet sind.

Aufgabe der Erfindung ist es, die CO₂-Emission sowie Schadstoffemission bei gleichzeitig verbesserten Leistungseigenschaften von Brennkraftmaschinen deutlich zu senken.

Die Lösung der Aufgabe gelingt mit den Merkmalen des unabhängigen Patentanspruchs.

Für das erfindungsgemäße Verfahren umfasst die Brennkraftmaschine einen aufladbaren Otto-Motor mit einem Gas-Einblasungssystem zur Einblasung des Gases in einen Luftansaugpfad stromauf der Zylinder, einen Abgasturbolader mit einem Verdichter und einer Turbine sowie einen stromauf des Verdichters im Luftansaugpfad angeordneten Kompressor sowie ein Direkteinspritzsystem zur direkten Einspritzung von Benzin in den Brennraum der Zylinder des Otto - Motors. Das Benzin- Direkteinspritzsystem dient insbesondere als Reserve, wenn der Gaskraftstoff zur Neige geht bzw. verbraucht ist.Somit werden die beiden Kraftstoffversorgungssysteme typischerweise wahlweise bzw. wechselweise betrieben.

Die Aufladung der Brennkraftmaschine erfolgt mit einem Abgasturbolader und einem Kompressor, die - je nach Drehzahl und Last - gleichzeitig bzw. alternativ wirksam sind. Mit dem z.B. stromauf des Abgasturboladers im Luftansaugpfad angeordneten Kompressor ist die Brennkraftmaschine, vorzugsweise im unteren Drehzahlbereich bei höheren Lasten, insbesondere beim Starten und bis zu einer Drehzahl von 1500 bis 2200 U/min, insbesondere etwa 1700 U/min überwiegend oder praktisch vollständig mit aufgeladener Luft versorgt. Abhängig von der Motorcharakteristik bis zu einer Motordrehzahl, ab der für einen kontinuierlichen Übergang auf Aufladung ausschließlich durch den Abgasturbolader ein ausreichender Ladedruck durch den Abgasturbolader zur Verfügung steht, ist die Brennkraftmaschine doppelt aufladbar. Je nach effektivem Mitteldruck liegt dieser Bereich bei erfindungsgemäß 2000 U/min bis 3500 U/min. Damit kann der Ladedruck erhöht werden sowie eine Verringerung des bei geringen Drehzahlen der Brennkraftmaschine auftretenden so genannten Turbolochs erzielt werden.

Die Brennkraftmaschine, insbesondere mit Erdgas betriebene Brennkraftmaschine, für das erfindungsgemäße Verfahren ist in einer Weiterbildung als "Downsizing"-Otto-Motor, d.h. als aufladbarer Otto-Motor mit einem, gegenüber einem nichtaufladbaren Otto-Motor mit gleicher Leistung, reduzierten Hubvolumen und/oder erhöhtem maximalen Motordrehmoment ausgebildet.

Die erfindungsgemäße Kombination aus indirekter Gaseinspritzung und direkter Benzineinspritzung hat den Vorteil, dass bei einem Wechsel der Kraftstoffeinspritzung (z.B. von Gas nach Benzin, insbesondere wenn der Gastank leer gefahren ist) die Leistungscharakteristik der Brennkraftmaschine, insbesondere bei Volllast) in etwa gleich bleibt. Wenn beide Kraftstoffe indirekt eingespritzt werden, würde bei dem beschriebenen Motortyp und der vorgesehenen Optimierung auf den Gasbetrieb die Motorleistung beim Benzinbetrieb spürbar geringer liegen. Erfindungsgemäß wird somit ein hoher Komfort erreicht bei gleichzeitiger Vermeidung einer Irritation des Fahrers durch einen plötzlichen Leistungseinbruch.

Beim "downsizing" werden bezüglich des Hubraums kleinere, dafür aufgeladene Brennkraftmaschinen verwendet, die die Leistungsdaten größerer, nicht aufgeladener Brennkraftmaschinen abbilden, wobei diese durch eine Lastpunktverschiebung in wirkungsgradseitig besseren Betriebsbereichen der Brennkraftmaschine betrieben werden. Der Vorteil liegt in der deutlichen Verminderung von Reibungsverlusten, Gewicht und Bauraum. Insgesamt wird ein Fahrzeug mit einem "Downsizing - Motor" sparsamer und abgasärmer. Vorzugsweise ist das Hubvolumen der Brennkraftmaschine um 30% bis 50%, insbesondere um 35% bis 45% verringert und beträgt insbesondere 1,0 Liter bis 1,8 Liter für eine mit CNG betriebene Brennkraftmaschine mit doppelter Aufladung.

Die Brennkraftmaschine für das erfindungsgemäße Verfahren kann für einen bivalenten Betrieb ausgelegt sein, ohne die sonst bei diesen üblichen Nachteile. Dies ist insbesondere bei einem "downsizing" des Otto-Motors vorteilhaft realisierbar, da durch damit verbundene Einsparungen ein höherer Aufwand durch das Vorhandensein eines Gaseinblasungssystems und eine Benzin-Direkteinspritzsystems kompensiert werden kann.

Die im erfindungsgemäßen Verfahren verwendete Brennkraftmaschine ist vorzugsweise für einen quasi-monovalenten Betrieb für Gas ausgelegt, bei welchem im "Notbetrieb" oder zur Reichweitenerhöhung über das zusätzliche Einspritzsystem ein Ottokraftstoff (Benzin) aus einem Nottank (< 15l Volumen) direkt in den Brennraum der Zylinder eingespritzt werden kann.

Bei dem erfindungsgemäßen Verfahren zum Betrieb einer Brennkraftmaschine mit Gas, insbesondere mit Erdgas, oder mit Benzin wird ein Otto-Motor mit einem Abgasturbolader sowie mit einem stromauf des Abgasturboladers in einem Luftansaugpfad angeordneten Kompressor aufgeladen, das Gas in den Luftansaugpfad der Brennkraftmaschine eingeblasen, wobei ein homogenes Gas-Luftgemisch mit 0,9 < A < 1,1 eingestellt wird, das Gas-Luftgemisch in Zylindern der Brennkraftmaschine hoch auf ein Verdichtungsverhältnis von 10 bis 14 verdichtet und gezündet wird und bei Betrieb mit Benzin das Benzin direkt in die Zylinderbrennkammer eingespritzt wird. Der Kompressor wird beim erfindungsgemäßen Verfahren ab einem mittleren Drehzahlbereich von 2000 U/min bis 3500 U/min abgekoppelt.

Die Verbrennung erfolgt vorzugsweise durch Fremdzündung mittels Zündkerzen. Die Aufbereitung des Gas-Luftgemisches erfolgt mit homogener und vorzugsweise mit stöchiometrischer Gemischbildung, wobei die Leistungseinstellung der Brennkraftmaschine durch Veränderung der Zylinder-Füllmenge realisiert wird. Bei Benzinbetrieb sind sämtliche bei Direkteinspritzung an sich bekannten Betriebsarten, insbesondere der verbrauchsgünstiger Mager- und Schichtladebetrieb realisierbar.

Um auch im dynamischen Betrieb eine optimale Schadstoffumwandlung in einem Katalysator der Brennkraftmaschine zu gewährleisten, wird vorzugsweise eine präzise stöchiometrische Zusammensetzung des Gas-Luftgemisch mit A = 1 eingestellt.

Die erfindungsgemäße Verbindung von "downsizing" mit kombinierter Kompressor- und Abgasturboaufladung sowie Saugrohrgaseinblasung führt bei dem Betrieb eines Otto-Motors mit Gas, insbesondere mit Erdgas (CNG), zu Drehmoment- und Leistungswerten von vergleichbaren Dieselmotoren, wobei die CO₂-Emission um ca. 25% reduziert wird. Die Herstellungskosten eines mit Erdgas betriebenen Fahrzeuges mit einer erfindungsgemäßen Brennkraftmaschine sind dabei nicht höher, als die für vergleichbare Fahrzeuge mit Dieselmotor und Partikelfilter.

Das bei üblicherweise bis zu 200 bar in einem Tank gespeicherte Gas, insbesondere CNG, wird in einer vorteilhaften Ausgestaltung der Erfindung in einem Gas-Einblasungssystem bis nahe an den Saugrohrdruck entspannt und über Gasinjektoren unmittelbar vor Einlassventilen der Zylinder, vorzugsweise über je ein Ventil pro Zylinder eingeblasen. Die homogene Gemischaufbereitung erfolgt durch die Einblasung des Gases in das Saugrohr, wobei vorzugsweise ein Gas-Luftgemisch mit λ= 1 durch Regelung über A-Sonden eingestellt wird.

Das Gas-Luftgemisch wird in den Zylindern wirkungsgradoptimiert auf ein Verdichtungsverhältnis von erfindungsgemäß von 10 bis 14 verdichtet. Dies ist höher als bei dem Basis-Ottomotor. Das Verdichtungsverhältnis ist dabei definiert als der Quotient aus maximalem und minimalem Zylindervolumen. Das maximale Zylindervolumen liegt vor, wenn sich der Zylinderkolben im unteren Totpunkt befindet, das minimale Zylindervolumen liegt vor, wenn sich der Zylinderkolben im oberen Totpunkt befindet. Der Vorgang der Verdichtung ist einer von vier Arbeitstakten der Brennkraftmaschine und sorgt dafür, dass die Temperatur und der Druck des Gas-Luftgemisches erhöht werden. Ein hohes Verdichtungsverhältnis erlaubt dabei einen späten Zündzeitpunkt auf Grund der schnelleren Verbrennung. Vorzugsweise erfolgt die Zündung auf der Basis eines für den CNG-Betrieb optimierten Zündkennfelds.

Im Brennraum der Zylinder wird das verdichtete Gemisch vorzugsweise mittels einer Zündkerze entflammt. Die Bereitstellung der Zündenergie erfolgt dabei über eine Zündspule, gesteuert durch eine Steuereinheit der Brennkraftmaschine.

In der im erfindungsgemäßen Verfahren verwendeten gasbetriebenen Brennkraftmaschine ist zur Steuerung des Ladedrucks bzw. zur Überbrückung des Kompressors eine den Kompressor überbrückende Bypass-Leitung mit einer einstellbaren Verdichterdrosselklappe angeordnet. Um unerwünschte Rückströmungen über die Bypass-Klappe in solchen Situationen zu verhindern, in denen der Kompressor weniger Luft fördert als der Abgasturbolader aus dem Raum nach der Verdichterdrosselklappe absaugt, kann außerdem eine Rückschlagklappe in der Bypassleitung vorgesehen sein, die sich bei Unterdruck in der Bypass-Leitung automatisch öffnet.

Erfindungsgemäß weist der Kompressor einen Antrieb auf, welcher über eine Kupplung mit einer Kurbelwelle der Brennkraftmaschine verbunden bzw. verbindbar ist, so dass der Kompressor mechanisch von der Brennkraftmaschine angetrieben werden kann. Der Kompressor wird beispielsweise über einen Riemen von der Kurbelwelle angetrieben. Mittels der Kupplung, beispielsweise einer Magnetkupplung, ist der Antrieb wahlweise von der Kurbelwelle trennbar, so dass in einem unteren Drehzahlbereich (bis ca. 3500 U/min) eine zusätzliche Aufladung durch den Kompressor realisiert wird und bei höheren Drehzahlen, bei welchen der Abgasturbolader eine ausreichende Aufladung gewährleistet, der Kompressor abgeschaltet werden kann, so dass es zu keinen Verlusten durch den Kompressor kommen kann.

Damit wird eine Brennkraftmaschine mit fülligem Drehmomentverlauf über einen breiten Drehzahlbereich bei gleichzeitig reduziertem Hubvolumen zur Verfügung gestellt.

Die Erfindung wird im Weiteren an Hand von Ausführungsbeispielen näher erläutert. Es zeigen
Fig. 1 eine mit Gas und Benzin betreibbare Brennkraftmaschine
Fig. 2 einen Zylinderkopf mit Saugrohr für eine mit Gas und Benzin betreibbare Brennkraftmaschine.

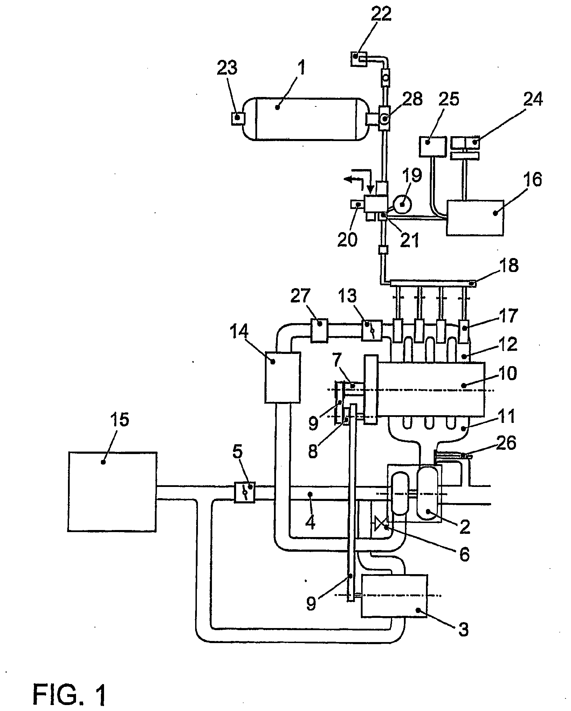

Die Brennkraftmaschine umfasst ein Gas-Einblasungssystem mit welchem Erdgas (oder ein anderer gasförmiger Kraftstoff) aus einem Tank 1 über ein Gasrail 18 und Gasinjektoren 17 in das Saugrohr 12 des Luftansaugpfades der Brennkraftmaschine eingeblasen werden kann. Das Erdgas, welches mit einem Druck von ca. 200 bar im Tank 1 gespeichert ist, wird im Gas-Einblasungssystem mittels Druckmanometer 19 und Druckregler 20 auf einen Druck von 5 bar bis 9 bar entspannt, wobei ein möglichst niedriger Druck zur Reichweitenmaximierung anzustreben ist. Die Einblasung des Erdgases über die Gasinjektoren 17 kann früher als bei Ottokraftstoff erfolgen. Ebenso wird über das gesamte Kennfeld aufgrund der Zündeigenschaften und Klopffestigkeit von Erdgas (CNG) ein früherer Zündzeitpunkt festgelegt, als beim Benzinbetrieb. Die Befüllung des Tanks 1 erfolgt über den Befüllanschluss 22 und das geöffnete Tankventil 28. Die Brennkraftmaschine verfügt ferner über ein Direkteinspritzsystem für Benzin sowie einen zugeordneten Tank mit einem Benzinförder- und Versorgungssystem, wie an sich bekannt (zur Vereinfachung in Fig. 1 nicht dargestellt). Das Direkteinspritzsystem kann zur Realisierung eines der an sich bekannten wandgeführten, luftgeführten oder strahlgeführten Brennverfahren ausgebildet sein.

Im Luftansaugpfad der Brennkraftmaschine ist ein Luftfilter 15, ein Kompressor 3, eine den Kompressor 3 überbrückende Bypass-Leitung 4 mit einer Verdichterdrosselklappe 5, ein Verdichter des Abgasturboladers 2, ein Ladeluftkühler 14, ein EGR-Ventil 27, eine Drosselklappe 13 und ein Saugrohr 12, welches in die jeweiligen Zylinder in einem Zylinderkurbelgehäuse 10 mündet, angeordnet. Im Abgaspfad der Brennkraftmaschine ist ein Abgaskrümmer 11, die Turbine des Abgasturboladers 2 und ein Wastegate 26 angeordnet.

Die Verdichterdrosselklappe 5 regelt dabei die Verdichtung des Kompressors 3, in dem über die Verdichterdrosselklappe 5 eine gewisse Rezirkulation zugelassen wird. Wird der Kompressor 3 bei ausreichend hohen Drehzahlen abgeworfen, wird die Verdichterdrosselklappe 5 voll geöffnet. Das Schubumluftventil 6 dient dem Schutz des Abgasturboladers im Schubbetrieb. Der Kompressor 3 wird über Riemen 9 von einer Kurbelwelle 7 der Brennkraftmaschine angetrieben. Dabei ist der Antrieb des Kompressors 3 mittels einer Kupplung 8, beispielsweise einer Magnetkupplung, von der Kurbelwelle 7 trennbar. Im unteren Drehzahlbereich bis 3500 U/min erfolgt eine doppelte Aufladung durch den Kompressor 3. Bei höheren Drehzahlen wird der Kompressor 3 abgekoppelt und die Brennkraftmaschine wird mit einer einfachen Aufladung durch den Abgasturbolader 2 betrieben. Damit wird ein fülliger Drehmomentverlauf der Brennkraftmaschine über einen breiten Drehzahlbereich realisiert.

Über einen Betriebsartenwahlschalter 24 und ein Motorsteuergerät 16 kann eine Umstellung von Gas- auf Benzinbetrieb erfolgen und über das Benzin - Einspritzsystem (nicht dargestellt) Benzin aus dem Tank direkt in die Brennräume der Zylinder eingespritzt werden. Eine Umstellung auf Benzin kann beispielsweise dann notwendig werden, wenn über die Kontrollanzeige 25 angezeigt wird, dass der Tank 1 nicht mehr ausreichend befüllt ist.

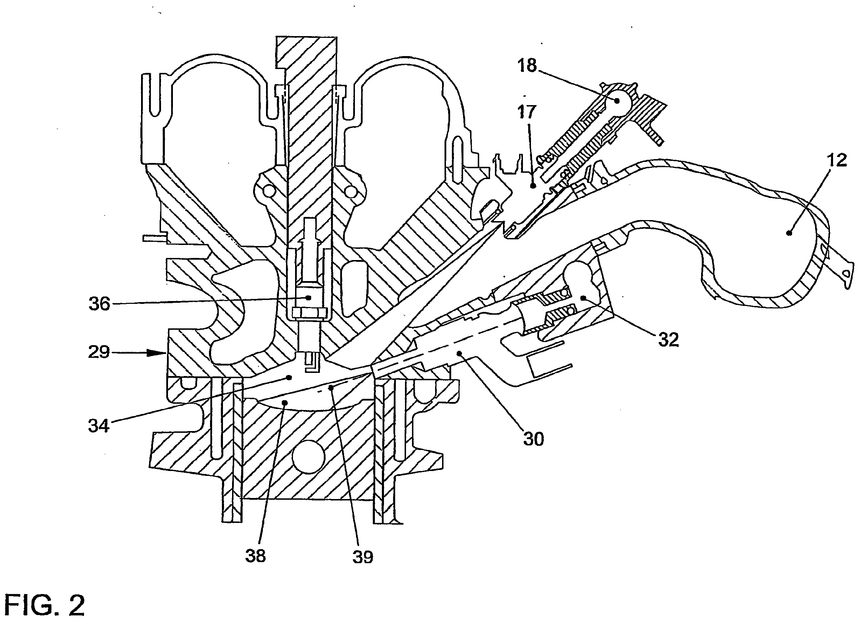

Figur 2 zeigt einen Zylinderkopf 29 mit Saugrohr 12 für eine mit Gas und Benzin betreibbare Brennkraftmaschine. Das Saugrohr 12 ist mir dem Brennraum 34 verbunden, wobei zur Vereinfachung in der Figur 2 keine Einlassventile dargestellt sind. Im Brennraum 34 kann mittels einer Zündkerze 34 ein Kraftstoff-Luftgemisch gezündet werden. Kraftstoff kann durch einen am Saugrohr 12 angeordneten Gasinjektor 17 in den Brennraum 34 gefördert werden. Der Gasinjektor ist mit dem Gasrail 18 verbunden und unmittelbar vor (nicht dargestellten) Einlassventilen des Zylinders angeordnet und erlaubt es Gas mit einem einstellbaren Druck in das Saugrohr 12 einzublasen. Ferner kann Kraftstoff direkt durch einen Benzininjektor 30 in den Brennraum 34 eingespritzt werden. Der Benzininjektor 30 im dargestellten Beispiel weist eine Einspritzdüse auf und ist seitlich zur Zylinderachse angeordnet, mit einem Benzinrail 32 verbunden und kann einen Einspritzstrahl 38 erzeugen. Wie dargestellt ist der Einspritzstrahl 38 um einen Winkel nach unten zur Düsenachse 39 geneigt. Vorzugsweise ist der Zylinderkopf 29, insbesondere auch der Benzininjektor 30 ein Serienprodukt, beispielsweise ein EA111 FSI Zylinderkopf von Volkswagen. Auf einfache Weise kann daher ein standardgemäß ausgerüstetes Benzin - Kraftfahrzeug auf Gasbetrieb nachgerüstet werden, indem ein Gaseinblassystem mit am Saugrohr 12 angeordneten Gasinjektoren 17 eingesetzt wird.

Die beispielhaft beschriebene Brennkraftmaschine weist trotz reduziertem Hubvolumen gegenüber einem vergleichbaren Dieselmotor vergleichbare Leistungs- und Drehmomentwerte auf. Durch den Erdgasbetrieb wird die CO₂-Emission um ca. 25 % gesenkt. Der Verbrauch liegt bei ca. 5,3 kg/100km (bei ca. 110 kW Volllastleistung und 1,4 Liter Hubraum) konkurrenzlos niedrig, wobei die Betriebskosten aufgrund des geringeren Kraftstoffpreises nochmals reduziert sind.

### Bezugszeichenliste

- 1: Tank
- 2: Abgasturbolader
- 3: Kompressor
- 4: Bypass-Leitung
- 5: Verdichterdrosselklappe
- 6: Schubumluftventil
- 7: Kurbelwelle
- 8: Kupplung
- 9: Riemen
- 10: Zylinderkurbelgehäuse
- 11: Abgaskrümmer
- 12: Saugrohr
- 13: Drosselklappe
- 14: Ladeluftkühler
- 15: Luftfilter
- 16: Motorsteuergerät
- 17: Gasinjektor
- 18: Gasrail
- 19: Druckmanometer
- 20: Druckregler
- 21: Absperrventil
- 22: Befüllanschluss
- 23: Thermosicherung
- 24: Betriebsartenwahlschalter
- 25: Kontrollanzeige
- 26: Wastegate
- 27: Abgasrückführ-Ventil
- 28: Tankventil
- 29: Zylinderkopf
- 30: Benzininjektor
- 32: Benzinrail
- 34: Brennraum
- 36: Zündkerze
- 38: Einspritzstrahl
- 39: Düsenachse

## Patentansprüche

1. Verfahren zum Betrieb einer Brennkraftmaschine, welche wahlweise mit Gas, oder mit Benzin betrieben wird und deren Hubvolumen 1,0 Liter bis 1,8 Liter beträgt,
wobei bei Betrieb mit Gas das Gas in einen Luftansaugpfad der Brennkraftmaschine unmittelbar vor Einlassventilen der Zylinder eingeblasen wird und
bei Betrieb mit Benzin eine direkte Einspritzung von Benzin in den Brennraum (34) von Zylindern erfolgt,
**dadurch gekennzeichnet, dass** die Brennkraftmaschine als aufladbarer Otto-Motor ausgebildet ist, die mit einem Abgasturbolader (2) sowie einem stromauf des Abgasturboladers (2) in einem Luftansaugpfad angeordneten Kompressor (3), der über eine Kupplung (8) von einer Kurbelwelle (7) der Brennkraftmaschine angetrieben wird, aufgeladen wird, wobei der Ladedruck mit einer den Kompressor (3) überbrückenden Bypassleitung (4) mit einer Regelklappe (5) eingestellt wird,
wobei bei Betrieb mit Gas
ein homogenes Gas-Luftgemisch mit 0,9 < λ < 1,1 eingestellt wird und
- das Gas-Luftgemisch in Zylindern der Brennkraftmaschine hoch auf ein Verdichtungsverhältnis von 10 bis 14 verdichtet und gezündet wird, und
- der Kompressor (3) ab einem mittleren Drehzahlbereich von 2000 U/min bis 3500 U/min abgekoppelt wird.

2. Verfahren nach Anspruch 1, **dadurch gekennzeichnet, dass** das Gas in einem GasEinblassystem von einem Druck oberhalb 10 bar auf etwa den Ladedruck entspannt wird.

3. Verfahren nach Anspruch 1 oder 2, **dadurch gekennzeichnet, dass** ein stöchiometrisches Gas-Luftgemisch mit A = 1 eingestellt wird.

4. Verfahren nach einem der Ansprüche 1 bis 3, **dadurch gekennzeichnet, dass** das verdichtete Gas-Luftgemisch auf Basis eines für den Gas-Betrieb wirkungsgradoptimierten Kennfelds gezündet wird.

## Claims

1. Method for operating an internal combustion engine which is operated selectively with gas or with gasoline and the swept volume of which amounts to 1.0 litres to 1.8 litres,
wherein, during operation with gas, the gas is injected into an air intake path of the internal combustion engine directly upstream of inlet valves of the cylinders, and
during operation with gasoline, a direct injection of gasoline into the combustion chamber (34) of cylinders is performed,
**characterized in that** the internal combustion engine is designed as a superchargeable Otto-cycle engine which is supercharged by means of an exhaust-gas turbocharger (2) and a supercharging blower (3) arranged upstream of the exhaust-gas turbocharger (2) in an air intake path, which supercharging blower is driven by a crankshaft (7) of the internal combustion engine via a clutch (8), wherein the charge pressure is set by means of a bypass line (4) which bypasses the supercharging blower (3) and which has a control flap (5),
wherein, during operation with gas,
a homogeneous gas-air mixture is set, with 0.9 < λ < 1.1, and
- the gas-air mixture is compressed in cylinders of the internal combustion engine up to a compression ratio of 10 to 14 and is ignited, and
- the supercharging blower (3) is decoupled above a mean rotational speed range of 2000 rpm to 3500 rpm.

2. Method according to Claim 1, **characterized in that** the gas is expanded in a gas injection system from a pressure above 10 bar to approximately the charge pressure.

3. Method according to Claim 1 or 2, **characterized in that** a stoichiometric gas-air mixture with λ = 1 is set.

4. Method according to one of Claims 1 to 3, **characterized in that** the compressed gas-air mixture is ignited on the basis of a characteristic map which is optimized in terms of efficiency for gas operation.

## Revendications

1. Procédé pour faire fonctionner un moteur à combustion interne, qui fonctionne de manière sélective avec du gaz ou de l'essence et dont la cylindrée est de 1,0 L à 1,8 L, dans lequel, en mode de fonctionnement à gaz, le gaz est soufflé dans un chemin d'admission d'air du moteur à combustion interne directement avant les soupapes d'admission des cylindres et, en mode de fonctionnement à l'essence, une injection directe d'essence a lieu dans la chambre de combustion (34) des cylindres,
**caractérisé en ce que** le moteur à combustion interne est réalisé sous forme de moteur Otto pouvant être suralimenté, qui est suralimenté avec un turbocompresseur à gaz d'échappement (2) ainsi qu'un compresseur (3) disposé en amont du turbocompresseur à gaz d'échappement (2) dans un chemin d'admission d'air, et qui est entraîné par le biais d'un embrayage (8) par un vilebrequin (7) du moteur à combustion interne, la pression de suralimentation étant ajustée avec une conduite de dérivation (4) contournant le compresseur (3) avec un clapet de réglage (5),
en mode de fonctionnement à gaz,
un mélange homogène d'air et de gaz étant ajusté avec 0,9 < λ < 1,1 et
- le mélange d'air et de gaz dans les cylindres du moteur à combustion interne est fortement comprimé à un rapport de compression de 10 à 14 et est allumé, et
- le compresseur (3), à partir d'une plage de vitesse de rotation moyenne de 2000 tr/m à 3500 tr/m est désaccouplé.

2. Procédé selon la revendication 1, **caractérisé en ce que** le gaz est détendu dans un système de soufflage de gaz d'une pression au-dessus de 10 bars à environ la pression de suralimentation.

3. Procédé selon la revendication 1 ou 2, **caractérisé en ce qu'**un mélange stoechiométrique de gaz et d'air avec λ = 1 est ajusté.

4. Procédé selon l'une quelconque des revendications 1 à 3, **caractérisé en ce que** le mélange comprimé de gaz et d'air est allumé sur la base d'un champ caractéristique à rendement optimisé pour le mode de fonctionnement à gaz.
